# FASCICULE DE BREVET EUROPEEN

(11) **EP 0 777 171 B1**
(45) Date de publication et mention de la délivrance du brevet: **27.06.2001**
(21) Numéro de dépôt: 96118144.3
(22) Date de dépôt: 13.11.1996
(51) Int. Cl.: G06F 1/00, G07C 9/00

(54) **Dispositif de sécurité commandant l'accès à un ordinateur ou à un terminal de réseau**
Sicherheitsvorrichtung zur Steuerung des Zugriffs auf einen Computer oder Netzwerkterminal
Security device for controlling access to a computer or a network terminal

(30) Priorité: 28.11.1995 CH 337595
(43) Date de publication de la demande: 04.06.1997
(73) Titulaire: C-Sam S.A., 1218 Grand-Saconnex (CH)
(72) Inventeur: Korshun, Yvan, Kharkov (UA)
(74) Mandataire: Micheli & Cie

(56) Documents cités:
- EP-A- 0 496 344
- WO-A-82/03286
- DE-A- 19 508 288
- DE-C- 4 015 482
- IBM TECHNICAL DISCLOSURE BULLETIN, vol. 35, no. 6, 1 Novembre 1992, pages 173-176, XP000314101 "PROXIMITY ACTIVATED COMPUTER CONSOLE LOCK"

## Description

La présente invention a pour objet un dispositif de sécurité commandant l'accès à un ordinateur ou un terminal de réseau muni de moyens ne permettant son utilisation qu'à l'aide d'un code d'accès porté par un support de code portable destiné à être mis en présence d'un lecteur de code monté sur un élément extérieur à l'ordinateur ou au terminal de réseau mais relié audit ordinateur ou terminal de réseau, l'utilisateur habilité, porteur dudit support de code, n'ayant pas nécessairement à connaître le code d'accès.

On connaît un tel dispositif par le document DE-A-40 15 482 qui décrit un système pour l'identification et la surveillance de la présence d'un utilisateur autorisé d'un terminal informatique. Le système comprend à cet effet un lecteur à distance destiné à coopérer avec un porteur de code. Ce lecteur est constitué par une antenne réceptrice contenue dans un sous-main disposé sous un clavier et relié par un câble à une unité électronique montée sur le terminal. Un lecteur additionnel peut être utilisé dans ce système et comprend une antenne contenue dans un sous-main pour une souris. Le porteur de code est par exemple constitué par une montre ou un bracelet. Dès que l'utilisateur s'éloigne d'une distance supérieure à 1 m, le couplage avec le lecteur est interrompu et le terminal se verrouille. Le système décrit dans ce document a donc comme but principal d'effectuer une surveillance continuelle de la présence de l'utilisateur autorisé à proximité du terminal.

Le document WO 82/03286 décrit un dispositif informatique permettant la lecture, la mémorisation et la vérification d'informations concernant un utilisateur autorisé, telles que ses empreintes digitales. Lorsqu'une correspondance suffisante est obtenue entre les informations mesurées d'une empreinte digitale et les données pré-enregistrées, l'accès à un équipement informatique est autorisé.

Le document EP-A-0 496 344 se réfère à une installation destinée à autoriser l'accès à un appareil, tel qu'un équipement informatique. Elle comprend à cet effet une unité de communication codée portée par l'utilisateur et une unité de communication montée sur un clavier de l'équipement informatique.

Finalement le document DE-A-195 08 288 décrit un procédé et une installation destinés à empêcher une utilisation non autorisée d'un ordinateur. A cet effet, une carte à puce est utilisée comme clef d'accès et introduite dans une unité de lecture connectée à l'ordinateur.

La présente invention a pour but de créer un dispositif de sécurité d'un nouveau type avec un lecteur de code caché qui permet un fonctionnement très précis, un faible coût de revient et un montage rapide et aisé.

Ces buts sont atteints grâce aux moyens définis dans la revendication 1.

Le dessin représente, à titre d'exemple, une forme d'exécution de l'objet de l'invention.

La fig. 1 est une vue en perspective d'un ordinateur personnel.

La fig. 2 est une vue d'un détail, et

La fig. 3 illustre schématiquement le principe opérationnel de cet ordinateur.

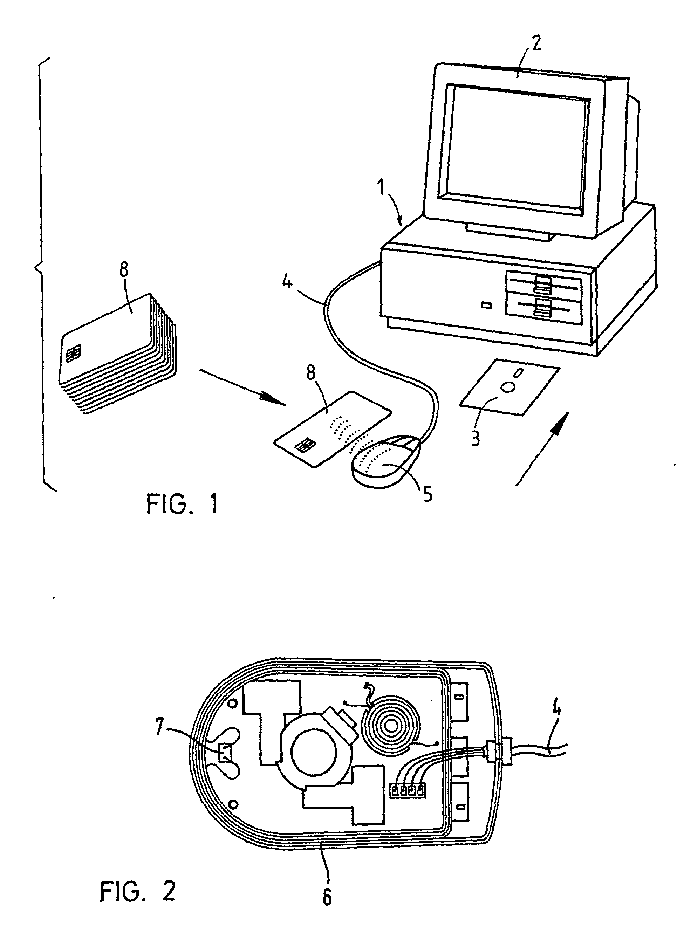

L'ordinateur personnel (PC) représenté à la fig. 1 est désigné d'une façon générale par 1. Il est surmonté de son écran d'affichage (2). Une disquette-programme prête à être engagée dans l'ordinateur (1) a été représentée en (3). Une souris, reliée à l'ordinateur 1 par un câble (4), est représentée en (5). Cette souris est munie d'une antenne (6) et d'un lecteur ou détecteur d'information (7) relié à ladite antenne (fig. 2).

L'installation comprend en outre un jeu de cartes à puce (8) dont la mémoire contient un code d'accès à l'ordinateur (1).

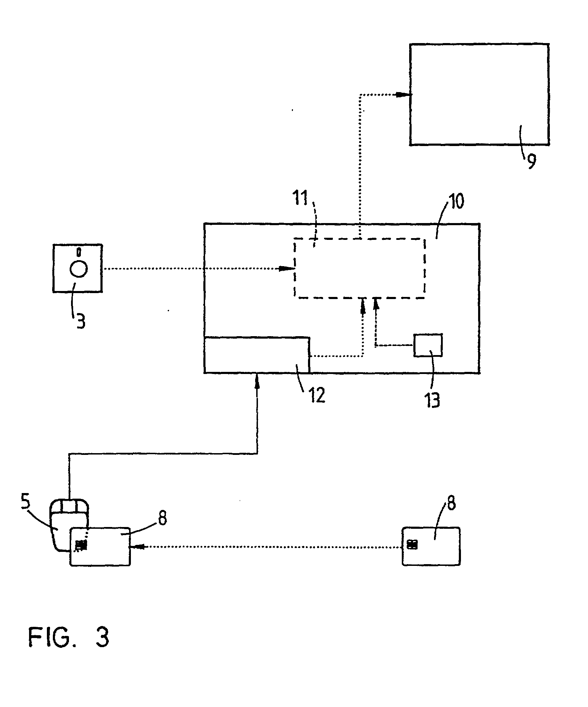

Le schéma de l'installation illustré à la fig. 3, où les éléments apparaissent sous forme de blocs, comprend un périphérique (9) représentant l'ensemble des périphériques usuels d'un ordinateur personnel (disque dur, programmes, fichiers, réseaux), un ensemble (10) comprenant un système de base entrée-sortie (basic input-output system BIOS) (11), une mémoire (12) et un microprocesseur (*µ*P) (13). La disquette-programme (3) est également visible sur cette figure de même que la souris (5) et deux cartes à puce d'utilisateurs (8).

La présente installation s'utilise de la façon suivante : chaque utilisateur habilité sera muni d'une carte à puce (8) qu'il présentera, lorsqu'il désire utiliser l'ordinateur (1), en regard de la souris (5). Le code d'accès contenu dans la mémoire de la carte à puce (8) sera détecté par l'antenne (6) de la souris (5) et transmis par le conducteur (4) à l'ordinateur (1). Ce dernier comparera le code d'accès de la carte (8) au code d'accès contenu dans sa mémoire (12) et, s'il y a identité, libérera le blocage produit par son dispositif de sécurité de telle manière qu'il puisse alors être utilisé.

Le ou les utilisateurs n'auront pas à connaître et, en principe, ne devront pas connaître le code d'accès, ce qui évitera que des indiscrétions puissent être commises.

Afin d'accroître la sécurité, les cartes d'utilisateur (8) pourront être munies d'un moyen de détection de caractères biométriques de chacun des utilisateurs, par exemple de l'empreinte digitale de leur index. Il faudra alors que chaque utilisateur pose son index sur lesdits moyens de détection pour que le code d'accès puisse être reconnu par l'ordinateur. Ainsi, tout emploi abusif des cartes d'utilisateur par des personnes non habilitées sera exclu.

Afin d'assurer une grande souplesse dans l'utilisation de cette installation, on pourra introduire dans la mémoire de l'ordinateur toute donnée relative au code d'accès ou au code biométrique personnel des utilisateurs en présentant de nouvelles cartes d'accès à la souris (5) tout en introduisant dans l'ordinateur une carte maîtresse sans laquelle les données contenues dans la mémoire de l'ordinateur ne pourraient pas être modifiées.

Les supports du code d'accès pourront ne pas être constitués par des cartes d'usagers mais par tous autres moyens portables tels que badges, montres, agendas électroniques, ou autres.

Dans l'exemple décrit et représenté, le détecteur du code d'accès est porté par la souris, ce qui à l'avantage que l'ordinateur lui-même n'a pas à subir de modifications pour que le dispositif suivant l'invention puisse lui être appliqué, d'autant que le conducteur (4) reliant la souris à l'ordinateur sera le conducteur ordinaire que comportent les souris. Il suffira que le lecteur (7) de la souris comprenne des moyens de commutation tels que dès qu'une carte d'usager est présentée à la souris, ce sont les informations relatives au code d'accès qui sont transmises à l'ordinateur alors que, aussitôt que la carte d'usager n'est plus située dans la zone d'influence de l'antenne (6) ce sont les informations ordinaires que fournissent les souris habituelles, produites par leur sphère rotative, qui sont transmises à l'ordinateur.

De même, dans l'exemple décrit et représenté, la lecture s'effectue à distance, sans contact matériel entre le lecteur et le support portable du code d'accès, grâce à une antenne. Mais on pourra également envisager que le support du code d'accès et les moyens de détection comprennent des zones conductrices qui devront être mises en contact matériel pour que la lecture du code d'accès puisse avoir lieu.

Il est à noter que les données contenues dans les supports de codes d'accès pourront ne pas être toutes identiques mais comporter des éléments d'information propres à chaque utilisateur de telle manière que ceux-ci n'aient pas tous la possibilité d'accéder à l'ensemble des fonctions de l'ordinateur ou du terminal de réseau, et que l'accès soit ainsi "sélectif".

On pourra prévoir que l'ordinateur ou le terminal de réseau soit agencé de telle manière que l'utilisateur soit obligé de représenter sa carte d'accès au cours des opérations qu'il effectue afin d'éviter qu'un utilisateur non habilité se substitue à l'utilisateur habilité en cours d'utilisation.

La présente invention comportera un très grand nombre d'applications : Télébanking, Vidéotex, banques de données d'Internet, etc... Elle pourra s'appliquer à tout équipement comportant un ordinateur intégré, telle une photocopieuse, toute machine ou autre.

## Revendications

1. Dispositif de sécurité commandant l'accès à un ordinateur (1) ou à un terminal de réseau muni de moyens ne permettant son utilisation qu'à l'aide d'un code d'accès porté par un support de code (8) portable destiné à être mis en présence d'un lecteur de code (6,7) monté sur un élément extérieur à l'ordinateur ou au terminal de réseau mais relié audit ordinateur ou terminal de réseau, l'utilisateur habilité, porteur dudit support de code (8), n'ayant pas nécessairement à connaître le code d'accès, caractérisé par le fait que le lecteur de code (6,7) est intégré dans une souris (5) reliée à l'ordinateur (1) ou au terminal de réseau.

2. Dispositif de sécurité suivant la revendication 1, caractérisé par le fait que le lecteur de code comprend une antenne (6) montée à l'intérieur de la souris (5) en suivant le pourtour intérieur de la souris (5), cette antenne (6) étant connectée à un détecteur d'information (7) logé dans la cavité de la souris et reliée à l'ordinateur.

3. Dispositif de sécurité suivant la revendication 1 ou 2, caractérisé par le fait que le support de code (8) comprend des moyens de lecture ou de détection de caractères biométriques de l'utilisateur habilité.

4. Dispositif de sécurité suivant l'une des revendications 1 à 3, caractérisé par le fait que le code d'accès est contenu dans la mémoire d'une carte informatique à puce constituant ledit support de code (8) portable.

5. Dispositif de sécurité suivant la revendication 1, caractérisé par le fait que le lecteur de code comporte une antenne (6) agencée de telle manière que la lecture puisse s'effectuer sans qu'il y ait nécessairement de contact matériel entre le support de code (8) et ledit lecteur.

6. Dispositif de sécurité suivant la revendication 1, caractérisé par le fait que le lecteur de code et le support de code (8) comprennent l'un et l'autre des zones conductrices de telle manière que la lecture du code d'accès ne puisse s'effectuer que lorsque les zones conductrices respectives sont en contact les unes avec les autres.

## Claims

1. A security device controlling access to a computer (1) or to a network terminal, provided with means enabling their use only with the assistance of an access code carried by a portable code support (8) designed for being exposed to a code reader (6, 7) mounted on a component external to the computer or the network terminal, but connected to said computer or network terminal, wherein the authorised user carrying said code support (8) does not necessarily need to know the access code, characterised in that the code reader (6, 7) is incorporated into a mouse (5) connected to the computer (1) or to the network terminal.

2. A safety device according to claim 1, characterised in that the code reader comprises an antenna (6) mounted inside the mouse (6) and conformed to adapt to the inner contour of the mouse (5), this antenna (6) being linked to an information detector (7) housed in the cavity of the mouse and connected to the computer.

3. A security device according to claim 1 or 2, characterised in that the code support (8) includes means for reading or detecting biometric characteristics of the authorised reader.

4. A security device according to one of claims 1 to 3, characterised in that the access code is contained in the memory of a chip card constituting said portable code support (8).

5. A security device according to claim 1, characterised in that the code reader includes an antenna (6) arranged in such a manner that the reading can be carried out without necessarily establishing a physical contact between the code support (8) and said reader.

6. A security device according to claim 1, characterised in that the code reader and the code support (8) both include conductive zones arranged in such a manner that the reading of the access code can be carried out only when the respective conductive zones are in contact with each other.

## Patentansprüche

1. Sicherheitsvorrichtung zur Steuerung des Zugriffs auf einen Computer (1) oder ein Netzwerkterminal, mit Mitteln ausgerüstet, die deren Verwendung nur mit Hilfe eines Zugriffscodes gestatten, der sich auf einem tragbaren Codeträger (8) befindet, der dazu bestimmt ist, einem Codeleser (6, 7) präsentiert zu werden, der an einem Element angebracht ist, das sich ausserhalb des Computers oder Netzwerkterminals befindet, aber mit dem benannten Computer oder Netzwerkterminal verbunden ist, wobei der befugte Benutzer, der Inhaber des benannten Codeträger (8) ist, den Zugriffscode nicht notwendigerweise kennen muss, dadurch gekennzeichnet, dass der Codeleser (6, 7) in eine mit dem Computer (1) oder Netzwerkterminal verbundene Maus (5) integriert ist.

2. Sicherheitsvorrichtung gemäss Anspruch 1, dadurch gekennzeichnet, dass der Codeleser eine im Innern der Maus (5) entlang des inneren Umfangs der Maus (5) montierte Antenne (6) umfasst, wobei diese Antenne (6) an einen im Hohlraum der Maus untergebrachten Datendemodulator (7) angeschlossen und mit dem Computer verbunden ist.

3. Sicherheitsvorrichtung gemäss Anspruch 1 oder 2, dadurch gekennzeichnet, dass der Codeträger (8) Mittel zum Lesen oder Demodulieren von biometrischen Kennzeichen des befugten Benutzers umfasst.

4. Sicherheitsvorrichtung gemäss einem der Ansprüche 1 bis 3, dadurch gekennzeichnet, dass der Zugriffscode im Speicher einer Datenchipkarte enthalten ist, die den benannten tragbaren Codeträger (8) darstellt.

5. Sicherheitsvorrichtung gemäss Anspruch 1, dadurch gekennzeichnet, dass der Codeleser eine Antenne (6) umfasst, die so eingerichtet ist, dass die Abtastung erfolgen kann, ohne dass notwendigerweise physische Berührung zwischen dem Codeträger (8) und dem benannten Leser besteht.

6. Sicherheitsvorrichtung gemäss Anspruch 1, dadurch gekennzeichnet, dass sowohl der Codeleser als auch der Codeträger (8) leitende Bereiche umfassen, derart, dass das Lesen des Zugriffscodes nur erfolgen kann, wenn die betreffenden leitenden Bereiche miteinander in Berührung stehen.
